# FASCICULE DE BREVET EUROPEEN

(11) **EP 0 895 883 B1**
(45) Date de publication et mention de la délivrance du brevet: **03.09.2003**
(21) Numéro de dépôt: 98401977.8
(22) Date de dépôt: 04.08.1998
(51) Int. Cl.: B60G 21/055, B21D 53/84

(54) **Procédé de fabrication d'une barre stabilisatrice pour véhicule**
Verfahren zur Herstellung eines Fahrzeugstabilisatorstabs
Method of making a vehicle stabiliser bar

(30) Priorité: 04.08.1997 FR 9709956
(43) Date de publication de la demande: 10.02.1999
(73) Titulaire: Styria Ressorts Véhicules Industriels, 90700 Chatenois Les Forges (FR)
(72) Inventeur: Morieux, Frédéric, 59000 Lille (FR); Hanar, Jean-Michel, 59500 Douai (FR)
(74) Mandataire: Busnel, Jean-Benoît

(56) Documents cités:
- EP-A- 0 160 588
- DE-A- 4 435 560
- DE-C- 19 549 218
- FR-A- 2 053 718
- FR-A- 2 531 014
- PATENT ABSTRACTS OF JAPAN vol. 007, no. 246 (M-253), 2 novembre 1983 & JP 58 133909 A (NIHON HATSUJIYOU KK), 9 août 1983

## Description

La présente invention concerne un procédé de fabrication d'une barre stabilisatrice pour véhicules, et en particulier, pour véhicules industriels.

Il existe déjà des barres stabilisatrices utilisées en association avec la suspension et les amortisseurs.

Ces barres sont généralement réalisées à partir d'un tube métallique cintré qui est destiné à être raccordé par sa partie centrale à un essieu au moyen de paliers, et, par ses extrémités, à un châssis au moyen d'une biellette.

Dans cette perspective, les extrémités du tube sont écrasées, comme cela est prévu dans le Patent Abstracts of Japan, vol 007 n° 246 du 2 novembre 1983 puis usinées ou découpées en forme, comme décrit aussi par le préambule de la revendication 1.

Ces embouts ont généralement une forme extérieure de révolution et comportent un alésage cylindrique ou conique pour l'assemblage avec la biellette.

Cependant, la fixation des embouts sur les extrémités du tube pose des problèmes d'accrochage de la soudure du fait de son incompatibilité avec la composition de l'alliage métallique constituant le tube qui possède un fort taux de carbone. Or, cette teneur élevée de carbone est pourtant nécessaire pour obtenir des propriétés mécaniques essentielles telles qu'une bonne tenue en fatigue de la barre.

Il en résulte ainsi des risques de rupture de la soudure, en particulier, lorsque la barre est fortement sollicitée.

En outre, l'embout et/ou son alésage sont susceptibles de se déformer consécutivement à l'élévation de température provoquée par le soudage, ce qui nécessite un contrôle et une éventuelle reprise des embouts avant assemblage de la biellette.

Au surplus, le soudage constitue une opération industrielle supplémentaire dont le coût important grève le prix de revient de la barre.

La présente invention a pour objectif de résoudre les problèmes précédents inhérents à l'art antérieur en supprimant les embouts rapportés et en réalisant les alésages directement dans les extrémités du tube. Ce but est atteint, conformément, à l'invention au moyen d'un procédé de fabrication d'une barre stabilisatrice pour véhicule à partir d'un tube métallique cintré destiné à être raccordé par sa partie centrale à un essieu au moyen de paliers et par ses extrémités à un châssis au moyen de biellette, caractérisé en ce qu'on augmente localement l'épaisseur de la paroi des extrémités dudit tube sans augmenter son diamètre extérieur puis on écrase lesdites extrémités, de façon à obtenir des tronçons plats et pleins, dans lesquels on effectue ensuite un usinage pour créer des alésages transversaux permettant la fixation des biellettes de raccordement au châssis.

Selon un premier mode de mise en oeuvre, on augmente localement l'épaisseur de la paroi des extrémités du tube en y introduisant un manchon métallique.

Selon un autre mode de mise en oeuvre, on augmente localement l'épaisseur de la paroi des extrémités du tube en réalisant un tube à paroi plus épaisse et en étirant ce tube de façon à conserver l'épaisseur initiale uniquement dans les tronçons d'extrémité.

Selon une variante de mise en oeuvre, il est prévu qu'on effectue un lamage de la zone à usiner pendant ou après l'écrasement.

Selon une autre variante, on effectue, préalablement à l'usinage, un poinçonnage en vue de réaliser un avant-trou.

Selon encore une autre variante, on chauffe avant et/ou pendant l'écrasement les tronçons d'extrémités du tube.

Selon une caractéristique avantageuse, on effectue l'écrasement des extrémités du tube de façon à mettre en contact ses faces internes en regard sans provoquer une quelconque diminution d'épaisseur de la paroi.

Il faut noter de manière incidente que la seule opération d'écrasement des extrémités du tube ne permet pas d'obtenir un résultat satisfaisant et que l'augmentation locale de l'épaisseur du tube est essentielle. En effet, l'épaisseur qui résulte de l'écrasement du tube est au plus égale à deux fois l'épaisseur de la paroi, ce qui reste insuffisant pour réaliser un bon usinage des extrémités et un assemblage fiable avec la biellette.

En outre, l'épaisseur de la paroi du tube est nécessairement limitée par la recherche d'une raideur déterminée de la barre compte tenu de son application mécanique anti-devers.

Le procédé de la présente invention est économique et facile à mettre en oeuvre.

Il permet d'obtenir une épaisseur de la paroi d'extrémité de la barre tubulaire qui est adaptée à l'usinage envisagé et qui est sans influence sur les propriétés mécaniques des autres parties de ladite barre. Il permet au surplus d'élever la teneur en carbone dans l'alliage métallique constitutif, ce qui améliore les performances de la barre.

Il est même possible selon l'invention d'augmenter l'épaisseur relative des extrémités en introduisant un manchon dont le matériau constitutif est différent de celui de la barre et a ainsi des propriétés mécaniques spécifiques.

La présente invention sera mieux comprise à la lecture de la description qui va suivre accompagnée des dessins sur lesquels :
- la figure 1 représente une vue de face d'une barre stabilisatrice tubulaire ;
- les figures 2a, 2b, 2c et 2d représentent des vues schématiques d'un mode de mise en oeuvre du procédé de l'invention.

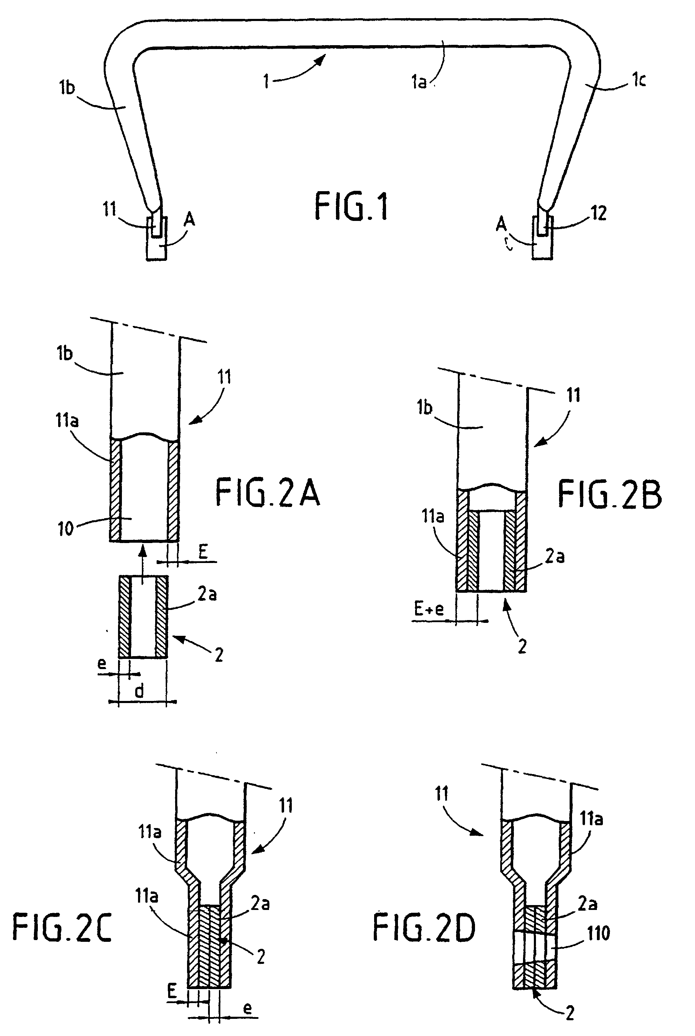

La barre stabilisatrice 1 représentée sur la figure 1 comprend une partie centrale 1a et deux parties latérales cintrées 1b, 1c réalisées à partir d'un tube métallique. La barre tubulaire est destinée à être raccordée, par sa partie centrale 1a à un essieu au moyen de paliers (non représentés) et par ses extrémités 11, 12 à un châssis.

Selon l'art antérieur, le montage sur le châssis est réalisé au moyen d'embouts, comme représenté sur la figure 1, et de biellettes de liaison (non représentées).

Les différentes étapes du procédé de l'invention sont représentées en coupe partielle sur les figures 2a à 2d.

Selon l'invention, il s'agit d'augmenter localement l'épaisseur de la paroi 11a du tube à l'extrémité 11.

Bien entendu, le procédé de l'invention s'appliquera de la même façon et conjointement à l'extrémité 12.

Sur les figures 2a à 2d, l'extrémité 11 délimite à l'intérieur de la barre tubulaire 1, un logement cylindrique 10.

Selon l'invention, on augmente l'épaisseur relative de la paroi 11a de façon à ce qu'elle soit supérieure à l'épaisseur E de la paroi dans la partie centrale 1a et dans les parties latérales 1b, 1c.

Cette augmentation relative et locale de l'épaisseur est réalisée, selon l'un des modes de mise en oeuvre, par introduction d'un manchon métallique 2 dans le logement 10 comme représenté sur les figures 2a et 2b.

Un autre mode de mise en oeuvre, non représenté, consiste à réaliser tout d'abord, une barre tubulaire dont la paroi a une épaisseur plus importante que l'épaisseur nécessaire pour obtenir le comportement mécanique recherché puis à étirer la barre tubulaire de façon à ne conserver l'épaisseur initiale que localement dans les tronçons d'extrémité.

L'épaisseur réduite dans la partie centrale et les parties latérales est alors inférieure à l'épaisseur E de la paroi aux extrémités 11,12 de la barre 1.

Dans le mode de mise en oeuvre des figures 2a à 2d, le manchon 2 assure un renfort de l'extrémité 11.

Le diamètre extérieur d du manchon 2 est légèrement supérieur ou égal au diamètre intérieur du logement 10 dans le tube et l'assemblage est de préférence ajusté.

L'épaisseur e de la paroi 2a du manchon 2 est déterminée au préalable en fonction de l'épaisseur finale recherchée pour l'usinage ultérieur.

Le diamètre intérieur du tube à l'extrémité 11 devient donc égal au diamètre intérieur (d-2e) du manchon 2 et son épaisseur E est augmentée de l'épaisseur e du manchon 2.

On effectue ensuite l'écrasement de l'extrémité 11, ce qui a pour effet d'aplatir à la fois le manchon 2 et le tube extérieur 11a.

L'écrasement est effectué avec une force suffisante pour obtenir, d'une part, un tronçon d'extrémité plat et plein dans lequel les faces internes en regard du tube (qui sont ici constituées des faces internes du manchon 2) sont en contact mutuel, et pour assurer, d'autre part, une cohésion de l'assemblage tout en évitant de provoquer une quelconque diminution de l'épaisseur E du tube externe 11a et de l'épaisseur e du manchon interne 2.

Il en résulte que l'épaisseur finale de l'extrémité 11 est égale à 2 x (E+e).

L'étape suivante consiste à effectuer un usinage dans le tronçon plein d'extrémité pour créer un alésage transversal cylindrique ou conique 110 permettant la fixation d'un élément de raccordement au châssis, tel qu'une biellette.

Selon une variante, il est prévu de chauffer les tronçons d'extrémité de la barre tubulaire 1 avant et/ou pendant l'écrasement de façon à augmenter la ductilité du métal.

Selon d'autres variantes avantageuses, il est prévu d'effectuer un lamage de la zone à usiner pendant ou après l'écrasement et d'effectuer un poinçonnage pour réaliser un avant-trou préalablement à l'usinage.

## Revendications

1. Procédé de fabrication d'une barre stabilisatrice (1) pour véhicule à partir d'un tube métallique cintré destiné à être raccordé par sa partie centrale (la) à un essieu au moyen de paliers et par ses extrémités (11,12) à un châssis au moyen de biellettes,
dans lequel on écrase lesdites extrémités, de façon à obtenir des tronçons plats et pleins, dans lesquels on effectue ensuite un usinage perpendiculaire pour créer des alésages transversaux (110) permettant la fixation des biellettes de raccordement au châssis, **caractérisé en ce qu'**on augmente, préalablement à l'écrasement desdites extrémités localement l'épaisseur de la paroi (11a,12a) des extrémités (11,12) dudit tube sans augmenter son diamètre extérieur.

2. Procédé selon la revendication 1, **caractérisé en ce qu'**on augmente localement l'épaisseur de la paroi (11a,12a) des extrémités (11,12) du tube en y introduisant un manchon métallique (2).

3. Procédé selon la revendication 1, **caractérisé en ce qu'**on augmente localement l'épaisseur de la paroi (11a,12a) des extrémités (11,12) du tube en réalisant un tube à paroi plus épaisse et en étirant ce tube de façon à conserver l'épaisseur initiale uniquement dans les tronçons d'extrémité.

4. Procédé selon l'une des revendications précédentes, **caractérisé en ce qu'**on effectue un lamage de la zone à usiner pendant ou après l'écrasement.

5. Procédé selon l'une des revendications précédentes, **caractérisé en ce qu'**on effectue, préalablement à l'usinage, un poinçonnage en vue de réaliser un avant-trou.

6. Procédé selon l'une des revendications précédentes, **caractérisé en ce qu'**on chauffe avant et/ou pendant l'écrasement les tronçons d'extrémités (11,12) du tube.

7. Procédé selon l'une des revendications précédentes, **caractérisé en ce qu'**on on effectue l'écrasement des extrémités (11,12) du tube de façon à mettre en contact ses faces internes en regard sans provoquer une quelconque diminution d'épaisseur de la paroi.

## Patentansprüche

1. Verfahren zum Herstellen eines Fahrzeugstabilisatorstabs (1), ausgehend von einem gekrümmten metallischen Rohr, das dazu bestimmt ist, mit seinem mittleren Abschnitt (1a) mittels Lagern mit einer Achse verbunden und mit seinen Enden (11,12) mittels Schwingarmen mit einem Chassis verbunden zu werden,
wobei man dann die Enden derart zusammendrückt, dass man flache und massive Endstücke erhält, an denen man anschließend senkrecht eine maschinelle Bearbeitung vornimmt, um hindurchgehende Bohrungen (110) zu erzeugen, die die Befestigung der Schwingarme zum Verbinden mit dem Chassis erlauben,
**dadurch gekennzeichnet, dass** man vor dem Zusammendrücken der Enden lokal die Dicke der Wand (11a, 12a) der Enden (11, 12) des Rohrs erhöht, ohne dessen Außendurchmesser zu erhöhen.

2. Verfahren nach Anspruch 1, **dadurch gekennzeichnet, dass** man die Dicke der Wand (11a, 12a) der Enden (11, 12) des Rohrs lokal erhöht, indem man ein Metallrohr (2) in sie hinein einführt.

3. Verfahren nach Anspruch 1, **dadurch gekennzeichnet, dass** man die Dicke der Wand (11a, 12a) der Enden (11, 12) des Rohrs lokal erhöht, indem man ein Rohr mit dickerer Wand schafft und dieses Rohr derart auszieht, dass man die Anfangsdicke nur an den Endstücken beibehält.

4. Verfahren nach einem der vorhergehenden Ansprüche, **dadurch gekennzeichnet, dass** man während des Zusammendrückens oder nach dem Zusammendrücken im maschinell zu bearbeitenden Bereich eine Senkung schafft.

5. Verfahren nach einem der vorhergehenden Ansprüche, **dadurch gekennzeichnet, dass** man vor dem maschinellen Bearbeiten zum Schaffen eines Vor-Lochs eine Lochung durchführt.

6. Verfahren nach einem der vorhergehenden Ansprüche, **dadurch gekennzeichnet, dass** man vor dem Zusammendrücken oder während des Zusammendrückens der Endstücke (11, 12) des Rohrs Wärme zuführt.

7. Verfahren nach einem der vorhergehenden Ansprüche, **dadurch gekennzeichnet, dass** man das Zusammendrücken der Enden (11, 12) des Rohrs derart durchführt, dass man dessen einander gegenüberliegende Innenflächen miteinander in Kontakt bringt, ohne irgendeine Verringerung der Dicke der Wand zu bewirken.

## Claims

1. Method of manufacturing a stabilizer bar (1) for a vehicle from a bent metal tube intended to be connected by its central part (la) to an axle by means of bearings and by its ends (11, 12) to a chassis by means of links, wherein said ends are crushed so as to obtain flat solid portions in which perpendicular machining is then performed to create transverse bores (110) to allow the connecting links to be fixed to the chassis, **characterized in that**, prior to crushing the said ends, the wall thickness (11a, 12a) of the ends (11, 12) of the said tube is locally increased without increasing its outside diameter.

2. Method according to Claim 1, **characterized in that** the wall thickness (11a, 12a) of the ends (11, 12) of the tube is locally increased by introducing a metal sleeve (2) into it.

3. Method according to Claim 1, **characterized in that** the wall thickness (11a, 12a) of the ends (11, 12) of the tube is locally increased by producing a tube with a thicker wall and by drawing this tube in such a way as to maintain the initial thickness only in the end portions.

4. Method according to one of the preceding claims, **characterized in that** the region for machining is faced during or after the crushing.

5. Method according to one of the preceding claims, **characterized in that** punching is performed prior to machining in order to produce a pilot hole.

6. Method according to one of the preceding claims, **characterized in that** the end portions (11, 12) of the tube are heated before and/or during the crushing.

7. Method according to one of the preceding claims, **characterized in that** the ends (11, 12) of the tube are crushed in such a way as to bring its facing internal faces into contact without causing any reduction in wall thickness.
